**Europäisches Patentamt**

**European Patent Office**

**Office européen des brevets**

(19)

(11) Veröffentlichungsnummer : **0 214 118 B1**

## (12) EUROPÄISCHE PATENTSCHRIFT

(45) Veröffentlichungstag der Patentschrift :
**09.10.91 Patentblatt 91/41**

(51) Int. Cl.$^5$ : **A01G 9/20, A01G 9/16**

(21) Anmeldenummer : **86890231.3**

(22) Anmeldetag : **19.08.86**

(54) **Frühbeetkasten.**

(30) Priorität : **19.08.85 AT 2410/85**

(43) Veröffentlichungstag der Anmeldung :
**11.03.87 Patentblatt 87/11**

(45) Bekanntmachung des Hinweises auf die
Patenterteilung :
**09.10.91 Patentblatt 91/41**

(84) Benannte Vertragsstaaten :
**CH DE FR GB LI NL SE**

(56) Entgegenhaltungen :
**CH-A- 160 102**
**CH-A- 243 976**

(56) Entgegenhaltungen :
**DE-A- 2 907 344**
**FR-A- 2 313 864**
**FR-A- 2 554 545**
**GB-A- 641 859**
**GB-A- 1 152 830**

(73) Patentinhaber : **Wüster, Heinrich**
**Auwerk 18**
**A-6460 Imst/Tirol (AT)**

(72) Erfinder : **Wüster, Heinrich**
**Auwerk 18**
**A-6460 Imst/Tirol (AT)**

(74) Vertreter : **Berger, Erhard, Dr.**
**Siebensterngasse 39 Postfach 306**
**A-1071 Wien (AT)**

**Beschreibung**

Frühbeetkasten mit zwei in einer Richtung des Frühbeetes hintereinander angeordneten, vorzugsweise lichtdurchlässigenn, Giebelwänden, welche im Bereich ihrer Giebeln und im Bereich des offenen Bodens des Frühbeetkastens durch Längsträger miteinander verbunden sind, und mit den von den Giebelwänden begrenzten Innenraum des Frühbeetkastens nach oben hin und zur Seite hin begrenzenden lichtdurchlässigen, fensterartigen Plattenelementen, welche sich in Richtung der die beiden Giebelspitzen der Giebelwände miteinander verbindenden Giebelachse erstrecken und quer zur Richtung der Giebelachse nebeneinander angeordnet jeweils an einem Teil der Umrisse der Giebelwände anliegen, wobei zu beiden Seiten der Giebelachse jeweils zumindest zwei dieser Plattenelemente quer zur Giebelachse nebeneinander angeordnet sind, von welchen die der Giebelachse unmittelbar benachbarten Plattenelemente in den, die beiden Giebelwände im Bereich ihrer Giebeln miteinander verbindenden Längsträger einhängbar sind.

Bekannte Frühbeetkästen für Frühbeete für den Hausgarten oder den Erwerbsgärtner bestehen im wesentlichen aus einem meist länglichen kastenförmigen, unten offenen und oben durch einen Deckel verschließbaren Behälter, dessen Seitenwände entweder aus Holz, Beton oder aber bei schon bekannten Lösungen aus lichtdurchlässigen Kunststoffplattenelementen gebildet werden. Diese bekannten Frühbeetkästen besitzen zumeist an ihren beiden in Längsrichtung des Frühbeetes verlaufenden Seiten eine niedrigere und eine höhere Seitenwand, die die in Längsrichtung des Frühbeetes hintereinander angeordneten Querwände miteinander verbinden. Nachteilig ist dabei, daß diese Seitenwände starr sind und das Arbeiten im Frühbeet mühsam machen, nachdem entweder vor der Seitenwand gekniet werden muß, oder aber bei genügend großen Frühbeeten im Frühbeet selbst gekniet werden muß, um im Frühbeet arbeiten zu können.

Weiters sind bereits Frübeetkästen bekannt, die aus zwei in Längsrichtung des Frühbeetes hintereinander angeordneten Giebelwänden mit der Form eines Rechteckes mit aufgesetztem Dreieck und in Querrichtung des Frühbeetes nebeneinander angeordneten Fensterelementen bestehen. Dabei sind die senkrechten Seitenwände des Frühbeetkastens starr gehalten, während die längs der Seiten des Giebeldreiecks angeordneten Fensterelemente verschwenkbar gehalten sind. Diese Frühbeetkästen haben den Nachteil, daß durch die starr angeordneten Seitenwände eine Bodenbearbeitung nur durch umständliches Bücken möglich ist. Außerdem ist die Belüftung nicht sehr günstig, nachdem nur durch das Öffnen des Dachfensterelementes keine Zirkulation der im Frühbeet enthaltenen Warmluft eintreten kann, und demgemäß nur der Dachbereich ausreichend belüftet wird.

Aus der GB-A-641 859 ist eine auf einem auf vertikalen Stützen angebrachten Längsträger aufgehängte tunnelförmige Frühbeetabdeckung bekannt, die aus entlang dem Längsträger nebeneinander jeweils mit einem Ende aufgehängten, stumpf abgewinkelten, verglasten Rahmenelementen besteht, welche sich jeweils mit dem anderen Ende am Boden abstützen. Die stirnseitigen Öffnungen der tunnelförmigen Frühbeetabdeckung können durch Endplatten abgeschlossen werden, die auf den am Ende der Abdeckung am Längsträger aufgehängten Rahmenelementen befestigt sind. Zur Bodenbearbeitung im Frühbeet kann zwar die entsprechende Anzahl an Rahmenelementen von dem aus Stützen und Längsträger bestehenden Traggerüst abgenommen und zur Seite gelegt werden, dafür ist aber einerseits viel Platz erforderlich und anderseits können die Rahmenelemente dabei leicht verschmutzen. Beim Arbeiten im Bereich der Stirnenden der tunnelförmigen Abdeckung müssen immer auch die Endplatten zusammen mit den Rahmenelementen zur Seite gelegt werden, wodurch der Windschutz im ganzen Frühbeet während der Bodenbearbeitung wegfällt. Nachteilig sind weiters die durch das zusätzliche Traggerüst verursachten höheren Kosten.

Die Erfindung, wie sie in den Ansprüchen gekennzeichnet ist, löst die Aufgabe einen Frühbeetkasten zu schaffen, bei dem ein einfaches und angenehmeres Bearbeiten des Bodens sowie eine verbesserte Belüftbarkeit möglich ist.

Bei einem Frühbeetkasten entsprechend der vorliegenden Erfindung wird neben wesentlich verbesserten Belüftungsmöglichkeiten auch eine Öffnung der Seitenwände bis zum Boden möglich, wodurch die Bodenbearbeitung im Frühbeet wesentlich angenehmer und schneller vor sich gehen kann. Weiters erlaubt es die gelenkige bewegliche Verbindung der einzelnen Plattenelemente ein Plattenelement gegen das andere zu klappen, ohne daß die Verbindung der Plattenelemente untereinander verloren gehen kann. Dadurch können auch alle Plattenelemente die auf einer der Seiten der Giebelachse angeordnet sind über die Giebelachse hinweg auf die Plattenelemente auf der anderen Seite der Giebelachse gelegt werden, ohne daß die Verbindung der Plattenelemente getrennt wird. Auf diese Weise sind die Plattenelemente sicher untergebracht.

Die aus miteinander verbundenen, flach aufeinanderlegbaren Plattenelementen bestehende Abdeckung läßt sich äußerst platzsparend zusammenlegen, wodurch der für die Abdeckung benötigte Stauraum beim Versand des Frühbeetkastens oder bei dessen Aufbewahrung bei Nichtgebrauch möglichst klein ist.

Nachstehend wird die Erfindung an Ausführungsbeispielen anhand der Zeichnungen näher erläutert.

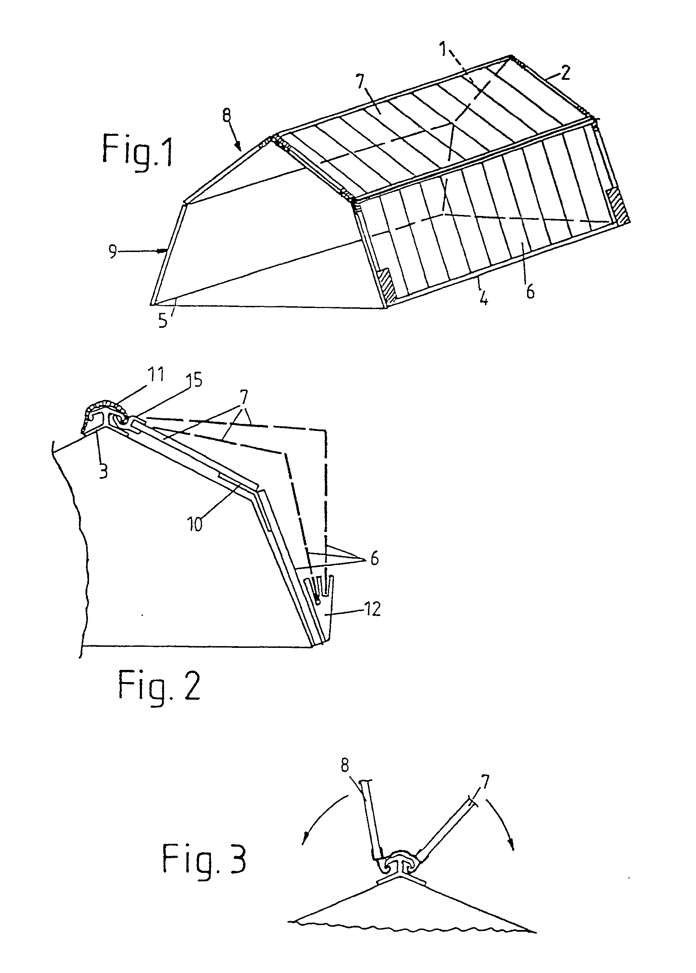

In den Zeichnungen zeigen Fig. 1 einen Frühbeetkasten in perspektivischer Ansicht, Fig. 2 im Schnitt und Fig. 3 ein Detail der Fig. 2.

Gemäß Fig. 1 besteht der erfindungsgemäße Frühbeetkasten aus zwei im Abstand hintereinander angeordneten Giebelwänden 1, 2, deren Form annähernd einem Trapez mit aufgesetztem Dreieck entspricht und die vorzugsweise aus lichtdurchlässigen Kunststoffplatten, die von Aluprofilen gerahmt sind, bestehen. Diese Form hat einerseits den Vorteil alle Fensterflächen in möglichst stumpfen Winkel der Sonne zur Vermeidung von Reflexionsverlusten entgegenzuneigen, andererseits hat sich diese Form als besonders stabil gegenüber Witterungseinflüssen, wie z.B. Wind und Niederschlägen (Schnee) erwiesen. Selbstverständlich ist auch eine andere Form der Giebelwände, z.B. ein auf ein Rechteck aufgesetztes Dreieck möglich.

Die beiden Giebelwände 1, 2 werden einerseits im Bereich ihrer Giebeln durch einen Längsträger 3 in der Form eines besonders geformten Giebelprofils und andererseits durch zwei im Bodenbereich verlaufende Fußprofile 4, 5 zueinander parallel fixiert. Vorzugsweise erfolgt die Verbindung der genannten drei Profile 3, 4, 5 mit den Rahmenprofilen der stirnseitigen Giebelwände 1, 2 durch lösbare Verschraubungen, sodaß der Frühbeetkasten bei Nichtgebrauch einfach zerlegt und platzsparend bei Seite gelegt werden kann.

Eine bevorzugte Ausführungsform der vorliegenden Erfindung sieht vor, daß alle vier rechteckigen lichtdurchlässigen Plattenelemente 6 bzw. 7 und 8 bzw. 9 des Frühbeetkastens an ihren Längsseiten durch flexible Bandscharniere 10 bzw. 11 miteinander verbunden sind. Diese Scharniere können aus witterungsbeständigen Bändern aus Monofilen oder aber aus gewobenen Bändern bestehen und sind mit den vorzugsweise aus Kunststoffplatten bestehenden Plattenelementen so verbunden, daß diese auf den Umrissen der Giebelwände aufliegen können. Die beiden dem Längsprofil 3 bzw. der die Giebelspitzen der Giebelwände verbindenden Giebelachse nächstliegenden lichtdurchlässigen Plattenelemente 7 bzw. 8 sind dabei auf ihrer dem Längsprofil 3 zugewandten Seite mit Scharnierprofilen 15 verbunden, die in den als Giebelprofil ausgebildeten Längsträger 3 eingreifen und eine gelenkige Lagerung und Drehbewegung um diesen ermöglichen. Auch diese beiden lichtdurchlässigen Plattenelemente 7 bzw. 8 sind an ihren Stirnseiten mit Bändern 11 verbunden.

Bei dieser vorgeschlagenen Ausführungsform geht das Einhängen der lichtdruchlässigen Plattenelemente nach Fig. 3 besonders einfach, indem das ganze durch die Bandscharniere gehaltene Plattenpaket mit den beiden lichtdurchlässigen Plattenelementen 7 und 8 angewinkelt und mit den Scharnierprofilen 15 voraus einfach auf das Profil des Längsträgers 3 gesenkt wird, worauf die lichtdurchlässigen Plattenelemente 7 bzw. 8 um ihren Drehpunkt in Position gebracht werden. Durch das Eingreifen der Scharnierprofile in das des Längsträgers 3 sind die lichtdurchlässigen Plattenelemente windsicher fixiert, können aber bei Bedarf umgekehrt wie beim Einhängevorgang einfach wieder entfernt werden.

Auch die lichtdurchlässigen Plattenelemente 6 bzw. 9 sind jeweils um ihr entsprechendes Band 10 drehbar mit den lichtdurchlässigen Plattenelementen 7 bzw. 8 verbunden, sodaß je nach Wunsch und Bedarf zur Belüftung oder zur Arbeit im Frühbeet ein Plattenelement nach dem anderen hochgeschwenkt werden kann.

Die stufenweise Öffnung beginnt beim Plattenelement 6 bzw. 9, welches um das Band 10 geschwenkt und unter das Plattenelement 7 bzw. 8 gelegt wird. Reicht diese Öffnung noch nicht aus, wird nun das Plattenelement 7 bzw. 8 nach oben verschwenkt und mit dem damit verbundenen Plattenelement 6 bzw. 9 auf das jeweils noch geschlossene Plattenelement 7 bzw. 8 gelegt. Damit ist eine volle Hälfte des erfindungsgemäßen Frühbeetkastens zur Belüftung oder ungehinderten Bearbeitung bis in den Bodenbereich ohne Bücken oder Knien zugänglich.

Immer sind die lichtdurchlässigen Plattenelemente in ihrer Lage durch die Bandscharniere fixiert, können aber bei Bedarf auch noch zusätzlich durch Rastverbindungen in den aufeinanderliegenden lichtdurchlässigen Plattenelementen fixiert werden.

Beim Wunsch nach vollständiger Öffnung können die lichtdurchlässigen Plattenelemente aber ebenso einfach ganz ausgehängt werden.

Besonders bei kalter Außenluft hat sich gezeigt, daß auch die kleinste, durch das Hochklappen des Plattenelementes 6 bzw. 9 mögliche Öffnung zu einer zu starken Abkühlung des Innenraumes führt.

Aus diesem Grund sind an jeder der Giebelwände 1, 2 je 2 vorzugsweise fächerförmige Fensterhalter vorgesehen, in deren erster Position das Plattenelement nur in der Richtung nach oben geführt wird, und dadurch absolut stabil auch bei Witterungseinflüssen wie Wind geschlossen bleibt. Diese Stellung wird aber auch verwendet, wenn einer der bereits bekannten Fensteröffner, die bei Wärme ihre Länge verändern, zur automatischen Belüftung des Frühbeetes eingesetzt werden soll. Indem dieser Fensteröffner mit dem Plattenelement 6 oder 9 verbunden wird, schiebt er das Plattenelement in den Ausnehmungen 12 nach oben, wobei auch hier eine sichere Fixierung gegen ungewolltes Öffnen z.B. durch Wind gegeben ist.

Bei manueller Bedienung stehen neben der Grundstellung noch vorzugsweise mindestens zwei weitere Öffnungspolitionen zur Verfügung, in die das Plattenelement 6 bzw. 9 je nach Bedarf eingeführt wird.

Die Belüftung hat sich deshalb als so ausgezeichnet erwiesen, nachdem gleichzeitig sowohl an der Unterseite eine Öffnung erfolgt, als auch durch die über die Bandscharniere verbundenen Plattenelemente 7 bzw. 8 gleichzeitig eine Belüftung im Dachbereich erzielt wird, wodurch die sich bildende Kaminwirkung eine gegenüber bekannten Frühbeetkästen wesentlich wirkungsvollere aber trotzdem genau dosierbare Belüftung erfolgt.

Eine beliebige Verlängerungsmöglichkeit des vorgeschlagenen Frühbeetkastens ist in der Weise möglich, daß statt einer kompletten Giebelwand 1 bzw. 2 nur der die Giebelwand umfassende Profilrahmen verschraubt wird, der im Gegensatz zur normalen Giebelwand aber auf beiden Seiten Auflagen für die Plattenelemente besitzt. Für die die Plattenelemente untereinander verbindenden Bänder 10, 11 können flexible Bänder oder elastische Bänder verwendet werden.

## Patentansprüche

1. Frühbeetkasten mit zwei in einer Richtung des Frühbeetes hintereinander angeordneten, vorzugsweise lichtdurchlässigen, Giebelwänden (1, 2), welche im Bereich ihrer Giebeln und im Bereich des offenen Bodens des Frühbeetkastens durch Längsträger (3, 4, 5) miteinander verbunden sind, und mit den von den Giebelwänden (1, 2) begrenzten Innenraum des Frühbeetkastens nach oben hin und zur Seite hin begrenzenden lichtdurchlässigen, fensterartigen Plattenelementen (6, 7, 8, 9), welche sich in Richtung der die beiden Giebelspitzen der Giebelwände (1, 2) miteinander verbindenden Giebelachse erstrecken und quer zur Richtung der Giebelachse nebeneinander angeordnet jeweils an einem Teil der Umrisse der Giebelwände (1, 2) anliegen, wobei zu beiden Seiten der Giebelachse jeweils zumindest zwei dieser Plattenelemente (6, 7 bzw. 8, 9) quer zur Giebelachse nebeneinander angeordnet sind, von welchen die der Giebelachse unmittelbar benachbarten Plattenelemente (7, 8) in den, die beiden Giebelwände (1, 2) im Bereich ihrer Giebeln miteinander verbindenden Längsträger (3) einhängbar sind, dadurch gekennzeichnet, daß die quer zur Giebelachse nebeneinander angeordneten Plattenelemente (6, 7, 8, 9) miteinander zu einer einteiligen aber mehrgliedrigen abnehmbaren Abdeckung verbunden sind, welche sich entlang den Umrissen der Giebelwände (1, 2) vom Boden des Frühbeetkasteens bis zur Giebelachse erstreckt und aus den im Bereich ihrer parallel zur Giebelachse verlaufenden nebeneinanderliegenden Längskanten untereinander gelenkig verbundenen Plattenelementen (6, 7, 8, 9) besteht.

2. Frühbeekasten nach Anspruch 1, dadurch gekennzeichnet, daß die Plattenelemente (6, 7, 8, 9) untereinander über flexible Bänder (10, 11) verbunden sind.

3. Frühbeetkasten nach Anspruch 1, dadurch gekennzeichnet, daß die Plattenelemente untereinander über Scharniere verbunden sind.

4. Frühbeetkasten nach einem der Ansprüche 1 bis 3, dadurch gekennzeichnet, daß die jeweils an den Boden des Frühbeetes anschließenden Plattenelemente (6, 9) der Abdeckung in zum entsprechenden Abschnitt des Umrisses der Giebelwände (1, 2) parallelen an den Giebelwänden (1, 2) vorgesehenen Führungen mittels eines temperaturempfindlichen Lüftungsautomaten aus der Geschlossenstellung in unterschiedliche Lüftungsstellungen verschiebbar sind.

5. Frühbeetkasten nach einem der Ansprüche 1 bis 3, dadurch gekennzeichnet, daß die jeweils an den Boden des Frühbeetes anschließenden Plattenelemente (6, 9) der Abdeckung in an den Giebelwänden (1, 2) im Bereich des Bodens angeordnete Halteelemente (12) einführbar sind, welche der Geschlossenstellung und unterschiedlichen Lüftungsstellungen zugeordnete Ausnehmungen besitzen.

## Claims

1. Cold frame with two preferably light-permeable gable walls (1, 2) which are disposed one behind the other in one direction of the cold frame and are connected to one another by longitudinal carriers (3, 4, 5) in the vicinity of their gables and in the vicinity of the open base of the cold frame, and with light-permeable window-like plate elements (6, 7, 8, 9) which delimit the inner space of the cold frame which is delimited at the top and at the side by the gable walls (1, 2), extend in the direction of the gable axis which interconnects the two gable tops of the gable walls (1, 2), and are disposed adjacent one another transversely to the direction of the gable axis such that they abut on part of the periphery of the gable walls (1, 2) in each case, wherein on both sides of the gable axis there are disposed in each case transversely to the gable axis and adjacent one another at least two of these plate elements (6, 7 or 8, 9), of which the plate elements (7, 8) which are immediately adjacent the gable axis may be suspended in the longitudinal carrier (3) which connects the two gable walls (1, 2) to one another in the vicinity of the gables thereof, characterised in that the plate elements (6, 7, 8, 9) which are disposed adjacent one another transversely to the gable axis are interconnected to form a removable cover which is formed in one piece but has several members, extends from the base of the cold frame to the gable axis along the peripheries of the gable walls (1, 2), and comprises plate elements (6, 7, 8, 9) which are interconnected in a hinged manner in the vicinity of the longitudinal edges thereof which lie adjacent one another and extend parallel to the gable axis.

2. Cold frame according to claim 1, characterised in that the plate elements (6, 7, 8, 9) are interconnected via flexible strips (10, 11).

3. Cold frame according to claim 1, characterised in that the plate elements are interconnected via hinge joints.

4. Cold frame according to any one of claims 1 to 3, characterised in that the plate elements (6, 9) of the cover, which are adjacent the base of the cold frame in each case, can be displaced in guiding means, which are provided on the gable walls (1, 2) parallel to the corresponding section of the periphery of the gable wall (1, 2) by means of an automatic temperature-sensitive ventilating device from the closed position into various ventilating positions.

5. Cold frame according to any one of claims 1 to 3, characterised in that the plate elements (6, 9) of the cover, which are adjacent the base of the cold frame in each case, can be inserted in holding elements (12) which are disposed on the gable walls (1, 2) in the vicinity of the base and comprise recesses which are associated with the closed position and various ventilating positions.

**Revendications**

1.Châssis de couche comportant deux parois de pignon (1, 2) de préférence transparentes, disposées l'une à la suite de l'autre dans une direction du châssis de couche, et reliées entre-elles dans la zone de leurs pignons et dans la zone du fond ouvert du châssis de couche, par des longerons (3, 4, 5), ainsi que des éléments en forme de plaques (6, 7, 8, 9) du type fenêtre, transparents et délimitant vers le haut et le côté l'espace intérieur délimité par les parois de pignon (1, 2), les éléments en forme de plaque s'étendant dans la direction de l'axe de pignon qui relie entre-eux les deux sommets de pignon des parois de pignon (1, 2), et s'appuyant chacun, en étant disposés côte à côte transversalement à la direction de l'axe de pignon, sur une partie des contours des parois de pignon (1, 2), au moins deux de ces éléments en forme de plaque (6, 7 et 8, 9) étant disposés côte à côte transversalement à l'axe de pignon, sur chacun des deux côtés de l'axe de pignon, élément dont ceux (7, 8) qui sont directement voisins de l'axe de pignon peuvent être suspendus sur le longeron (3) reliant entre-elles les deux parois de pignon (1, 2) dans la zone de leurs pignons, caractérisé en ce que les éléments en forme de plaque (6, 7, 8, 9) disposés côté à côte transversalement à l'axe de pignon, sont reliés entre-eux un ensemble de couverture amovible, d'un seul tenant mais à articulations multiples, qui s'étend le long des contours des parois de pignon (1, 2), à partir du fond du châssis de couche jusqu'à l'axe de pignon, et qui est constitué par les éléments en forme de plaques (6, 7, 8, 9) reliés entre-eux de manière articulée dans la zone de leurs bords longitudinaux adjacents s'étendant parallèlement à l'axe de pignon.

2. Châssis de couche selon la revendication 1, caractérisé en ce que les éléments en forme de plaque (6, 7, 8, 9) sont reliés entre-eux par l'intermédiaire de bandes flexibles (10, 11).

3. Châssis de couche selon la revendication 1, caractérisé en ce que les éléments en forme de plaque sont reliés entre-eux par l'intermédiaire de charnières.

4. Châssis de couche selon l'une des revendications 1 à 3, caractérisé en ce que les éléments en forme de plaque (6, 9) de l'ensemble de couverture, se raccordant chacun au fond du châssis de couche, peuvent être déplacés dans des guidages prévus sur les parois de pignon (1, 2) et parallèles à la partie correspondante du pourtour des parois de pignon (1, 2), d'une position de fermeture à différentes positions d'aération, au moyen d'un dispositif automatique d'aération sensible à la température.

5. Châssis de couche selon l'une des revendications 1 à 3, caractérisé en ce que les éléments en forme de plaque (6, 9) de l'ensemble de couverture, se raccordant chacun au fond du châssis de couche, peuvent être introduits dans des éléments de support (12) disposés au niveau de ce fond sur les parois de pignon (1, 2), et pourvus d'évidements affectés à la position de fermeture et à différentes positions d'aération.

Fig.1

Fig. 2

Fig. 3